# EUROPEAN PATENT SPECIFICATION

(11) **EP 3 564 034 B1**
(45) Date of publication and mention of the grant of the patent: **15.10.2025**
(21) Application number: 18170910.6
(22) Date of filing: 04.05.2018
(51) Int. Cl.: B33Y 10/00, B22F 3/105, B33Y 30/00, B33Y 50/00, B33Y 40/00, B29C 64/153, B29C 64/386, B29C 64/214, B29C 64/245, B29C 64/268

(54) **METHOD FOR DETERMINING AT LEAST ONE FOCAL POSITION OF AN ENERGY BEAM**
VERFAHREN ZUR BESTIMMUNG MINDESTENS EINER FOKALPOSITION EINES ENERGIESTRAHLS
MÉTHODE POUR DÉTERMINER AU MOINS UNE POSITION FOCALE D'UN FAISCEAU D'ÉNERGIE

(43) Date of publication of application: 06.11.2019
(73) Proprietor: Concept Laser GmbH, 96215 Lichtenfels (DE)
(72) Inventor: WERNER, Jürgen, 96215 Lichtenfels (DE); BECK, Moritz, 96052 Bamberg (DE); GRAF, Dominic, 96479 Weitramsdorf (DE)
(74) Representative: Hafner & Kohl PartmbB

(56) References cited:
- EP-A1- 3 241 668
- DE-A1- 102015 226 722
- DE-A1- 102016 200 043
- US-A1- 2015 105 891
- US-A1- 2016 236 279

## Description

The invention relates to a method for determining at least one focal position of an energy beam used in an apparatus for additively manufacturing three-dimensional objects by means of successive layerwise selective irradiation and consolidation of layers of a build material which can be consolidated by means of an energy beam, comprising an irradiation device that is adapted to generate the energy beam and guide the energy beam over a determination plane, in particular a build plane in which the build material is applied to be irradiated, wherein the irradiation device is adapted to generate at least one irradiation region, in particular a melt pool, in the determination plane.

Apparatuses for additively manufacturing three-dimensional objects, for example via successive layerwise selective consolidation of layers of a build material, for example using an energy beam, such as a laser beam or an electron beam, are generally known from prior art. To selectively consolidate the layer of build material it is known to guide the energy beam over the build material that is arranged in a determination plane, for example a build plane. Thus, the build material that is arranged in the determination plane can selectively be irradiated to consolidate the build material corresponding to the geometry or the three-dimensional shape of the object that is additively manufactured in the additive manufacturing process.

Further, to ensure that defined quality requirements defining the quality of the additive manufacturing process and the object to be additively manufactured are met, it is known to determine (process) parameters of the additive manufacturing process, for example of different layers of build material arranged in the determination plane throughout the additive manufacturing process. For example, it is possible to capture images of the determination plane, in particular of the build plane, throughout the additive manufacturing process. One of those (process) parameters is, for example, the focal position of the energy beam or relates to whether an actual focal position of the energy beam meets a reference focal position. The focal position of the energy beam is crucial for the additive manufacturing process, as a deviation from the reference focal position leads to a deviation from a nominal or reference energy input into the build material arranged in the build plane.

Typically, the actual focal position of the energy beam is determined by irradiating lines into metal sheets, wherein the focal position is varied by varying the relative position of the metal sheets to the energy source. Hence, the irradiated lines can be compared to determine the position of the metal sheet, in which the reference focal position was met. This determination process is cumbersome and time-consuming, as corresponding metal sheets have to be prepared and have to be mounted inside the process chamber, wherein a focal position determination process has to be performed in advance to the additive manufacturing process. Further, the determination of the actual focal position can only be performed in advance to an additive manufacturing process and not during an additive manufacturing process.

From the document DE 10 2015 226 722 A1 a calibration ledge is known for calibrating a manufacturing device for manufacturing a three-dimensional object. The calibration ledge includes an aperture ledge extending in its longitudinal direction and comprising several aperture openings arranged in a row in the longitudinal direction of the calibration ledge which are more permeable for the radiation of the irradiation device than the region of the aperture ledge surrounding the aperture openings.

Document DE 10 2016 200043 A1 discloses an apparatus for additively manufacturing three-dimensional objects by means of successive layerwise selective irradiation and consolidation of layers of a build material which can be consolidated by means of an energy beam, comprising an irradiation device that is adapted to generate the energy beam and guide the energy beam over a determination plane, in particular a build plane in which the build material is applied to be irradiated, wherein the irradiation device is adapted to generate at least one irradiation region in the determination plane, wherein the apparatus comprises a determination device that is adapted to determine a difference between a reference focal position and an actual focal position of the energy beam based on radiation that is emitted from at least one irradiation region, wherein the irradiation device is adapted to generate the at least one irradiation region on a build plate in advance to an additive manufacturing process or the irradiation device is adapted to generate at least one test structure in the build plane during an additive manufacturing process, wherein the irradiation device is adapted to generate the at least one irradiation region at least partially on the at least one test structure or the apparatus comprises at least one application element providing a determination means, preferably a metal plate, wherein the irradiation device is adapted to generate the at least one irradiation region on the determination means.

Document US 2016/236279 A1 discloses an apparatus for additively manufacturing three-dimensional objects by means of successive layerwise selective irradiation and consolidation of layers of a build material which can be consolidated by means of an energy beam, comprising an irradiation device that is adapted to generate the energy beam and guide the energy beam over a determination plane, in particular a build plane in which the build material is applied to be irradiated, wherein the irradiation device is adapted to generate at least one irradiation region, in particular a melt pool, in the determination plane, wherein a determination device that is adapted to determine a focal position of the energy beam and/or a difference between a reference focal position and an actual focal position of the energy beam based on radiation that is emitted from at least one irradiation region.

It is an object of the present invention to provide an apparatus for additively manufacturing three-dimensional objects, wherein the determination of the focal position of the energy beam is improved.

The object is inventively achieved by a method according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the apparatus comprises respective means, for example an irradiation device, that is adapted to generate and guide an energy beam over a determination plane, for example a build plane in which the build material is arranged/applied to be irradiated. Thus, irradiation regions or at least one irradiation region may be generated via the energy beam that is generated by the irradiation device, wherein the energy beam can be generated and guided onto a surface of build material that is arranged or applied in the determination plane to generate the at least one irradiation region. The invention is based on the idea that a determination device is provided that is adapted to determine a focal position of the energy beam and/or a difference between a reference focal position and an actual focal position of the energy beam based on radiation that is emitted from at least one irradiation region.

To determine the focal position and/or the difference, as described before, the energy beam is guided in the determination plane to generate radiation that is emitted from at least one irradiation region (irradiated region) of the determination plane. In other words, via the energy beam being guided over the determination plane a material or a test object that is arranged in the determination plane is irradiated via the energy beam. Due to the energy input via the energy beam, it is possible that the irradiation region, i.e. the region over which the energy beam has been guided in the determination plane, emits radiation.

The radiation that is emitted from the irradiation region of the determination plane due to the irradiation with the energy beam is inventively used to determine the focal position of the energy beam and/or the difference between a reference focal position and the actual focal position of the energy beam. Therefore, the irradiation region is generated via an irradiation of a region in the process chamber with the energy beam. Due to the irradiation with the energy beam radiation is emitted from the at least one irradiation region, typically visible light, that is inventively used to determine the focal position.

Hence, it is not necessary to prepare a separate object in advance to an additive manufacturing process and arrange the object inside the process chamber of the apparatus. Thus, time can be saved, as the process chamber of the apparatus does not have to be prepared specifically for the determination process in which the focal position of the energy beam is determined. Hence, time for making the process chamber inert, arranging and positioning the test specimen, for example metal sheets, inside the process chamber, removing the test specimen from the process chamber and making the process chamber inert again for the additive manufacturing process to be performed, can be saved.

Further, it is inventively achieved that the focal position of the energy beam can be determined during an additive manufacturing process by using the radiation that is emitted from the at least one irradiation region. This allows for controlling the focal position of the energy beam during the additive manufacturing process, which is particularly beneficial, as the focal position of the energy beam may need to be calibrated during the additive manufacturing process as the focal position may deviate from a reference focal position due to thermal shifts, since the temperature of components of the additive manufacturing apparatus can vary, e.g. increase, throughout the additive manufacturing process. In particular, components of the optical set-up can heat up during the additive manufacturing process causing a thermal shift influencing the actual focal position of the energy beam. Those influences can be automatically compensated via the determination device, as described before. Hence, the apparatus allows for an automated determination (and adjustment) of the focal position of the energy beam. Thus, it is not necessary that personnel manually determines the focal position and manually adjusts the focal position.

The term "build plane" may refer to a surface of build material that is arranged or applied inside a process chamber of the apparatus, which build material arranged in the build plane can be irradiated via the energy beam to layerwise and successively build the object. The term "determination plane" refers to a plane, for example a surface of material, in particular build material or another arbitrary material such as a test object, that is also arranged inside the process chamber, particularly for determining the focal position and/or the difference between the reference focal position and the actual focal position of the energy beam. As "determination plane" the "build plane" may be used, but it is not necessary that the determination plane, i.e. the plane in which the focal position is determined, has to lie within the build plane. In other words, the determination of the focal position may involve irradiating at least one part of the build plane, if the determination plane lies within the build plane or comprises the build plane, but it is also possible that the determination plane differs from the build plane, for example if another part or a region (differing from the build plane) inside the process chamber is irradiated to determine the focal position.

The term "focal position" generally relates to the position, in particular the z-position, in which a desired energy distribution, e.g. a desired spot diameter / cross-section of the energy beam is generated. The focal position therefore, does not necessarily require that the minimal cross-section or minimal diameter of the energy beam is generated in the focal position, but it is also possible that a spot of the energy beam with a diameter larger than a minimal diameter, e.g. with a defined defocus, is achieved, for example in the build plane. The focal position therefore, defines the positon in which a desired intensity distribution of the energy beam is achieved. Typically, the desired intensity distribution, e.g. spot geometry, is to be generated in the build plane. For example, the focal position may relate to a defined size of a cross-section of the energy beam that is achieved in the build plane, for example a defined distance away from a focusing optical unit.

Preferably, the determination is performed based on thermal radiation emitted from the irradiation region, wherein the thermal radiation is generated due to an irradiation of the irradiation region with the energy beam. Thus, as the energy beam is guided onto the determination plane, an irradiation region is generated. Due to the energy input into the irradiation region, the irradiation region is heated and therefore, thermal radiation is emitted from the irradiation region. The thermal radiation can be detected or received via the determination device, wherein the determination of the focal position of the energy beam can be performed based on the thermal radiation emitted from the irradiation region. In other words, the determination of the focal position of the energy beam is decoupled from the energy beam itself, as the radiation that is used to determine the focal position of the energy beam differs from the energy beam itself. Thus, the energy beam itself is not monitored or detected via the determination device, but instead, (thermal) radiation that is emitted from the irradiation region is detected/used to determine the focal position of the energy beam and/or a difference between the reference focal position of the actual focal position of the energy beam.

According to an embodiment, the determination device may comprise at least one optical detector unit, in particular comprising at least one optical sensor, preferably a CMOS or CCD - sensor, and/or a photo diode. The at least one optical detector unit therefore, may comprise one or more optical sensors, for example cameras and/or a photo diodes. Each optical detector unit may comprise a sensor plane, for example an array of optical sensors, such as a CMOS or CCD - sensor, which are adapted to generate a signal dependent on radiation being incident on the optical sensors. For example, the CMOS or CCD sensor may comprise an array of 100*100 pixels, wherein each pixel is adapted to generate a signal, if the pixel is irradiated with radiation emitted from the irradiation region. The radiation that is emitted from the irradiation region may be guided to the determination device via an irradiation device, in particular the same irradiation device that is used to guide the energy beam in the process chamber.

In other words, the irradiation region of the determination plane that is irradiated with the energy beam generates radiation which is emitted from the irradiation region, wherein the irradiation region or the determination plane, respectively, is imaged onto the at least one optical detector unit of the determination device. Dependent on how many optical sensors of the optical detector unit are irradiated, a corresponding signal can be generated referring to the size of the irradiation region that is linked with the focal position of the energy beam. Thus, the focal position of the energy beam can be determined based on the radiation that is emitted from the at least one irradiation region. It is also possible to use a photo diode as optical detector unit or have an optical detector unit comprising at least one photo diode, wherein the photo diode generates a signal corresponding to the radiation emitted from the irradiation region that is incident on the photo diode.

The determination device may provide a sensor plane, wherein the determination device may be adapted to image at least one part of the determination plane comprising at least one irradiation region onto the sensor plane, wherein the determination device may be adapted to perform the determination based on a ratio between the available sensor plane and the size of the irradiation region imaged onto the sensor plane. The part of the determination plane in which the irradiation region is generated via the irradiation with the energy beam, can be imaged onto the sensor plane, wherein dependent on the actual focal position of the energy beam the size of the irradiation region will vary in the determination plane. In particular, if the energy beam meets an optimal focal position, i.e. the energy beam is properly focused onto the determination plane, the size of the irradiation region will reach a minimum. Therefore, it is possible to compare the size of the sensor plane that is available with the size of the irradiation region that is imaged onto the sensor plane. Of course, a predefined size of the irradiation region that is imaged onto the sensor plane can also be compared with an actual size of the irradiation region, for example if not a minimum is desired, but a defined size of the spot of the energy beam in the determination plane, in particular in the build plane, is desired.

The determination device may further be adapted to perform the determination based on a ratio between an observation plane of the sensor plane and a part of the observation plane that is irradiated via the radiation emitted from the irradiation region, in particular a ratio between the number of pixels of the entire observation plane and the number of pixels of the observation plane that are irradiated via the radiation emitted from the irradiation region. The observation plane may be defined as a part of the sensor plane in which the irradiation region is imaged. The image of the irradiation region in the observation plane therefore, inter alia, depends on the aspect ratio, e.g. defined by a lens or an objective used to image the irradiation region. Thus, dependent on the optical setup, e.g. the lens or objective used to image the irradiation region onto the sensor plane, in particular onto the observation region of the sensor plane, the size of the pixels can be adjusted via the objective, for instance. For example, it is possible to adjust the aspect ratio or the magnification of the lens or the objective, in that the entire sensor plane may be used as observation plane.

The available sensor plane may be defined by the sensor plane itself, for example the optical detector unit that is used and provides the sensor plane. The sensor plane may for example be defined by its dimensions, for example the number of pixels comprised in the optical detector unit, such as a CMOS or CCD - sensor. Dependent on the size of the irradiation region in the determination plane, the number of pixels that are irradiated via the emitted radiation varies and therefore, generate a signal that is directly linked with the actual spot size of the energy beam in the determination plane, i.e. the actual focal position of the energy beam. Thus, the actual position of the energy beam can be compared with a reference focal position of the energy beam and therefore, a difference between an actual focal position and a reference focal position of the energy beam can be determined as well.

The focal position of the energy beam is determined based on the radiation emitted from the irradiation region in advance to an additive manufacturing process that is performed on the apparatus. Thus, it is not necessary to perform the determination of the focal position of the energy beam in advance to an additive manufacturing process in a separate determination process for determining the focal position of the energy beam. However, it is possible to prepare the additive manufacturing apparatus for performing the additive manufacturing process, wherein the focal position of the energy beam may be determined in advance to an additive manufacturing process.

The irradiation device of the apparatus is further adapted to generate the at least one irradiation region on a build plate in advance to an additive manufacturing process. The term "build plate" may refer to a structure of the additive manufacturing apparatus that carries the volume of build material in which the object is additively manufactured, i.e. which build material is selectively consolidated to form the additively built object. For example, it is possible to generate a test pattern on the build plate by guiding the energy beam onto the build plate, thereby depleting energy in the build plate according to the test pattern. Thus, at least one irradiation region is generated on the build plate which emits radiation that can be used to determine the focal position of the energy beam, as described before.

Thus, a specific determination means may be provided that can be part of or coupled with a functional component of the apparatus which is arranged inside the process chamber of the apparatus. It is possible to determine the focal position of the energy beam in advance to an/or during and/or after an additive manufacturing process, as the determination means is already inside the process chamber of the apparatus and can be used to generate the irradiation region emitting the radiation based on which the determination of the focal position of the energy beam can be performed.

The apparatus can further be improved in that a control unit can be provided that is adapted to provide at least two sets of material parameters relating to different materials arranged in or applied in or forming the determination plane, wherein the determination device is adapted to perform the determination based on the chosen set of material parameters. According to this embodiment, a control unit can be provided for taking into account that the determination plane or the material that is arranged in the determination plane and that is irradiated to generate the radiation used for the determination process, can consist of or comprise different materials. As the material that is used to generate the irradiation region strongly influences the radiation that is emitted due to the corresponding irradiation, it is beneficial to define at least one material parameter taking the specific behavior of the corresponding material into account. The control unit provides multiple sets of material parameters that can be chosen dependent on the material that is arranged in or forms the determination plane. For example, dependent on the material of the determination means, or the material that is used in the build plane from which the test structure is generated, or the material of the build plate, for instance, it is possible to choose the corresponding set of material parameters.

The control unit may specifically be adapted to automatically choose the proper set of material parameters dependent on the build plate or the determination means or the build material that is used in the additive manufacturing process. Of course, it is also possible to provide a user interface via which the user is adapted to choose the correct set of material parameters. Based on the set of material parameters it is possible to adjust/adapt the determination device to ensure that the determination process is performed based on the correct material parameters, i.e. that the radiation that is emitted from the irradiation region is interpreted correctly.

Further, the irradiation device may be adapted to generate at least two irradiation regions in two different positions, in particular in the build plane, wherein the determination device may be adapted to perform the determination for the at least two different irradiation regions. Thus, the focal position of the energy beam or the difference between the actual focal position and a reference focal position can be determined for multiple positions inside the process chamber of the additive manufacturing apparatus. For example, test structures can be generated in different positions in the build plane to perform the determination process. It is also possible to have multiple determination means, for example mounted to different functional components of the apparatus or have a determination means being movable inside the process chamber of the additive manufacturing apparatus to determine the focal position of the energy beam in at least two different positions. Of course, it is also possible to generate different irradiation regions in different positions of the build plate. Hence, the deviations corresponding to different positions of the focal position of the energy beam can also be taken into account. For example, as the focal position may differ for at least two different positions inside the process chamber, such deviations can be determined and compensated, accordingly.

It is also possible to store the results of the determination process, in particular the actual focal position of the energy beam, for example in a data storage device, such as a hard drive. Further, a map spatially resolving the actual focal position of the energy beam and/or differences between the actual focal position and the reference focal position, may be stored, for example to visualize the actual focal position and/or deviations, as described before, to the user. Such a map may be generated for at least two layers, in particular each layer in the additive manufacturing process, thereby generating a three-dimensional map. Thus, the user may identify deviations that occurred during the additive manufacturing process.

According to another embodiment of the apparatus, an optical device may be provided, in particular a beam expander, which is adapted to adjust the focal position of the energy beam, wherein the optical device is adapted to vary the actual focal position of the energy beam in the determination process. According to this embodiment, an optical device, in particular a beam expander, is used instead of varying the position of the test structure, for example via positioning the build plate. The optical device may be adapted to adjust the focal position of the energy beam dependent on the determined focal position of the energy beam and/or the determined difference between the reference focal position and the actual focal position of the energy beam. Hence, it is possible to adjust/control the focal position of the energy beam via the optical device, in particular the beam expander. Thus, it is also possible to compensate an identified difference between an actual focal position and a reference focal position that has previously been determined via the determination process performed by the determination device. Advantageously, using the optical device for adjusting the focal position of the energy beam in the determination process, it is also ensured that further sources of error, such as positioning a build plate, can be avoided.

Further, an optical filter unit may be provided that is arranged in the radiation path of the radiation emitted from the irradiation region propagating to the determination device, wherein the filter unit is adapted to at least partially filter radiation that is reflected at the irradiation region, in particular adapted to filter at least one part of the energy beam that is reflected at the irradiation region. Thus, it is ensured that only radiation is incident on the determination device, in particular the optical detector unit that is emitted from the irradiation region, for example visible light due to the emission of thermal radiation.

Hence, a reflected part of the energy beam that is reflected at the irradiation region is filtered via the optical filter unit to prevent a reflected part of the energy beam to reach the optical detector unit. Thus, it is ensured that only the radiation is incident on the optical detector unit that is emitted from the irradiation region. The optical filter unit may be designed to only allow a specific wavelength or radiation in a specific wavelength range to pass the optical filter unit and reach the determination device. The optical filter unit may, for example, be adapted to filter wavelengths larger than 1000 nm. In particular, the optical filter unit may be adapted to filter the wavelength of the energy beam. Further, it is possible to differently filter radiation via the optical filter unit for two different optical detector units. For example, two optical detector units may be provided, wherein a first optical detector unit may be built as or may comprise a camera, such as a CCD camera, whereas the second optical detector unit may be built as or may comprise a photo diode, for instance. Hence, it is possible to individually filter radiation that is emitted from the irradiation region propagating towards the first and/or the second optical detector unit, e.g. the camera and/or the photo diode.

Exemplary embodiments of the invention are described with reference to the Fig. The Fig. are schematic diagrams, wherein
- Fig. 1: shows an apparatus in advance to an additive manufacturing process; and
- Fig. 2: shows the apparatus of Fig. 1 during an additive manufacturing process.

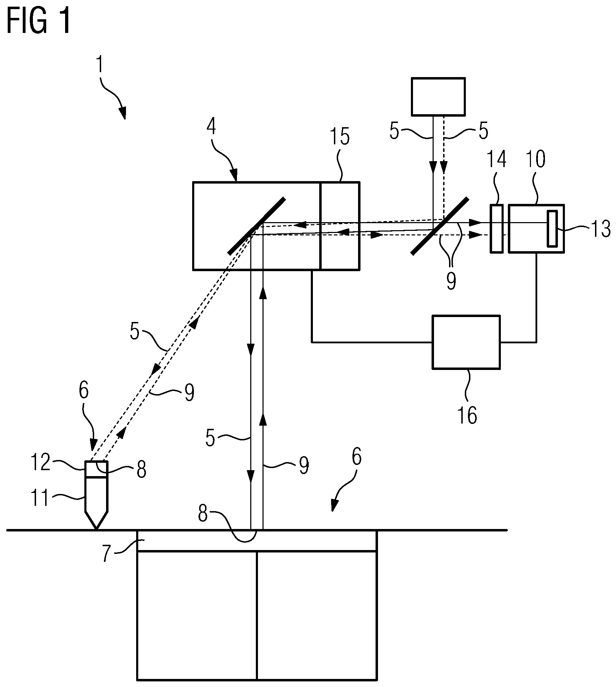

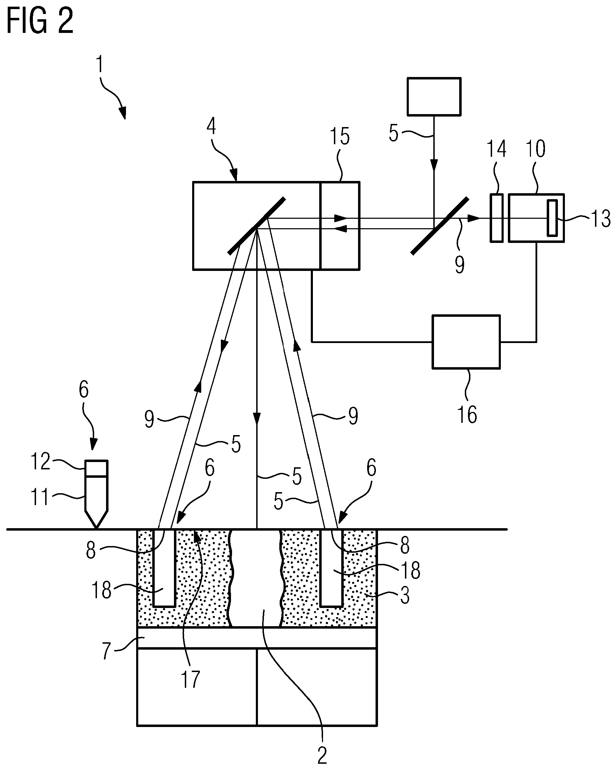

Fig. 1 shows an apparatus 1 for additively manufacturing three-dimensional objects 2 (Fig. 2) by means of successive layerwise selective irradiation and consolidation of layers of a build material 3. The apparatus 1 further comprises an irradiation device 4 that is adapted to generate an energy beam 5, wherein the build material 3 can be selectively irradiated and thereby consolidated by means of the energy beam 5. In other words, the energy beam 5 may be selectively guided over a determination plane 6, for example a build plane 17 (Fig. 2), in which build material 3 is applied to be irradiated via the energy beam 5.

In the exemplary embodiment that is depicted in Fig. 1, a build plate 7 is arranged in the determination plane 6. Thus, the energy beam 5 can be guided onto the build plate 7 to generate an irradiation region 8 by irradiating a part of the build plane 7 arranged in the determination plane 6. The irradiation region 8 therefore, emits radiation 9 that can be guided towards the determination device 10 via the irradiation device 4. The determination device 10 is therefore, adapted to determine a focal position of the energy beam 5 and/or a difference between the reference focal position and an actual focal position of the energy beam 5 based on the radiation 9 that is emitted from the irradiation region 8.

Fig. 1 further shows an application element 11 of an application unit (not shown) that provides a determination means 12, for example a metal plate mounted on top of the application element 11. The irradiation device 4 is adapted to guide the energy beam 5 onto the determination means 12 to generate an irradiation region 8 on the determination means 12. Thus, a determination plane 6 can also be defined on top of the determination means 12 to which the energy beam 5 can be guided to generate an irradiation region 8. Thus, radiation 9 is also emitted from the irradiation region 8 in the determination plane 6 formed on the determination means 12, which also can be guided by the irradiation device 4 to the determination device 10. Thus, the determination device 10 is also adapted to determine the focal position of the energy beam 5 based on the radiation 9 that is emitted from the irradiation region 8 on the determination means 12, as described before.

The determination device 10 comprises an optical detector unit 13, for example a CMOS or CCD-sensor, onto which the radiation 9 is guided via the irradiation device 4. Hence, a ratio between an observation plane, e.g. the entire available sensor plane of the detector unit 13, for example the CCD chip of the optical detector unit 13, and a part of the observation plane of the sensor plane that is irradiated via the radiation 9, can be formed. The size of the irradiation region 8 that is imaged onto the optical detector unit 13 is directly related with the focal position (spot size) of the energy beam 5 in the determination plane 6. Hence, the irradiation region 8 that is generated in the determination plane 6 is also directly related with the spot size of the energy beam 5, in particular defined via the focal position of the energy beam 5.

Thus, it is possible to determine the focal position of the energy beam 5 via the determination device 10, as described before. The apparatus 1 further comprises an optical filter unit 14 that is arranged in the radiation path of the radiation 9 which guided towards the determination device 10 along the radiation path, wherein the optical filter unit 14 is adapted to filter radiation that is reflected at the determination plane 6, in particular adapted to filter a reflected part of the energy beam 5. Thus, preferably only radiation 9 that is emitted from the irradiation region 8, such as thermal radiation emitted from the irradiation region 8 due to the energy input, can pass the optical filter unit 14.

The apparatus 1, in particular the irradiation device 4, further comprises an optical device 15, for example a beam expander, that is adapted to adjust the focal position of the energy beam 5, in particular during the determination process, in which the focal position of the energy beam 5 is determined, as described before. Thus, the focal position of the energy beam 5 may be varied during the determination process to find an optimal focal position of the energy beam 5. It is also possible to compensate an identified difference between the actual focal position of the energy beam 5 and a reference focal position of the energy beam 5 via the optical device 15.

As depicted in Fig. 1, the apparatus 1 comprises a control unit 16 in which multiple sets of material parameters can be stored, which control unit 16 is adapted to choose a suitable set of material parameters dependent on the material of the build plate 7 or the determination means 12, for instance. As the material of the build plate 7 or the determination means 12 strongly influences, how the radiation 9 is interpreted via the determination device 10, it is beneficial to provide information to the determination device 10 via the control unit 16. It is also possible to provide a user interface via which the user, i.e. a plant operator, can choose the correct set of material parameters. For example, different sets of material parameters, for example parameter sets for tungsten, titanium, aluminum, steel or different materials, such as metals, ceramics and the like can be stored in the control unit 16 to ensure that the right set of material parameters can be chosen in which material the irradiation region 8 is generated.

Fig. 2 shows the apparatus 1 of Fig. 1 during an additive manufacturing process. Of course, all details, features and advantages described with respect to Fig. 1, are fully transferable to the situation that is depicted in Fig. 1. For the sake of simplicity, the generation of the irradiation region 8 on the determination means 12 arranged on top of the application element 11 and the generation of the irradiation region 8 in the build plate 7 is not described with respect to Fig. 2, although it is possible.

Fig. 2 shows that the irradiation device 4 may further be adapted to guide the energy beam 5 in the build plane 17 to irradiate build material 3. Due to the irradiation of build material 3, the object 2 can be manufactured. Besides, it is also possible to guide the energy beam 5 in the determination plane 6, which is at least partially identical with the build plane 17. In the situation depicted in Fig. 2 the determination plane 6 lies in the build plane 17 for forming test structures 18 out of the build material 3. Thus, a determination plane 6 can be provided on top of the tests structures 18, to which the energy beam 5 can be guided to generate an irradiation region 8. Again, the irradiation region 8 that is generated on top of the tests structures 18 emits (thermal) radiation 9 that can be guided to the determination device 10 via the irradiation device 4, as described before. Thus, it is possible to determine the focal position of the energy beam 5 in advance to and during and after an additive manufacturing process.

Of course, it is not necessary to provide determination means 12 and the determination via the tests structures 18, but it is possible to choose one of the methods for determining the focal position of the energy beam 5, that is suitable. It is also possible to merely generate test structures 18 during an additive manufacturing process to determine the focal position of the energy beam 5. Also, it is also possible to merely provide determination means 12 to generate the irradiation region 8, as described before. Self-evidently, an arbitrary combination of the described ways in which the irradiation region 8 can be generated, is also possible.

The method is used for determining at least one focal position of the energy beam 5 and/or a difference between the reference focal position and an actual focal position of the energy beam 5 that is used in the apparatus 1. Thus, the inventive determination method may be performed on the apparatus 1.

## Claims

1. Method for determining at least one focal position of an energy beam (5) and/or a difference between a reference focal position and an actual focal position of the energy beam (5), used in an apparatus (1) for additively manufacturing three-dimensional objects (2) by means of successive layerwise selective irradiation and consolidation of layers of a build material (3) which can be consolidated by means of the energy beam (5), wherein an irradiation region (8) is generated in a determination plane (6) and a focal position of the energy beam (5) and/or a difference between a reference focal position and an actual focal position of the energy beam (5) is determined based on radiation (9) that is emitted from at least one irradiation region (8), which is generated on a build plate (7) in advance to an additive manufacturing process.

2. Method according to claim 1, **characterized in that** the determination is performed based on thermal radiation (9) emitted from the irradiation region (8), wherein the thermal radiation (9) is generated due to an irradiation of the irradiation region (8) with the energy beam (5).

3. Method according to claim 1 or 2, **characterized in that** a determination device (10) is used that comprises at least one optical detector unit (13), in particular comprising at least one optical sensor, preferably a CMOS or CCD-sensor, and/or a photo diode.

4. Method according to claim 3, **characterized in that** a sensor plane is provided by the determination device (10), wherein the at least one part of the determination plane (6) comprising at least one irradiation region (8) is imaged onto the sensor plane.

5. Method according to claim 4, **characterized in that** the determination is performed based on a ratio between an observation plane of the sensor plane, in particular the available sensor plane, and a part of the observation plane that is irradiated via the radiation (9) emitted from the irradiation region (8), in particular a ratio between the number of pixels of the observation plane and the number of pixels of the observation plane that are irradiated via the radiation (9) emitted from the irradiation region (8).

6. Method according to one of the preceding claims, **characterized in that** the focal position is determined based on the radiation (9) emitted from the determination plane (6) in advance to an additive manufacturing process performed on the apparatus (1).

7. Method according to one of the preceding claims, **characterized by** providing at least two sets of material parameters relating to different materials arranged in or forming the determination plane (6) by a control unit (16), wherein the determination is performed based on the chosen set of material parameters.

8. Method according to one of the preceding claims, **characterized in that** at least two irradiation regions (8) are generated in two different positions, in particular in the build plane (17), wherein the determination is performed for the at least two different irradiation regions (8).

9. Method according to one of the preceding claims, **characterized by** adjusting the focal position of the energy beam (5) via an optical device (15), wherein the actual focal position of the energy beam (5) is varied via the optical device (15) in the determination process.

10. Method according to one of the preceding claims, **characterized by** an optical filter unit (14) that is arranged in the radiation path of the radiation (9) emitted from the irradiation region (8) propagating to the determination device (10), wherein radiation that is reflected at the irradiation region (8) is at least partially filtered via the optical filter unit (14), in particular at least one part of the energy beam (5) that is reflected at the irradiation region (8) is filtered.

## Patentansprüche

1. Verfahren zur Bestimmung mindestens einer Brennposition eines Energiestrahls (5) und/oder einer Differenz zwischen einer Bezugsbrennposition und einer tatsächlichen Brennposition des Energiestrahls (5), verwendet in einer Vorrichtung (1) zur additiven Herstellung dreidimensionaler Objekte (2) mittels aufeinanderfolgender schichtweiser selektiver Bestrahlung und Konsolidierung von Schichten eines Baumaterials (3), die mittels des Energiestrahls (5) konsolidiert werden können, wobei ein Bestrahlungsbereich (8) in einer Bestimmungsebene (6) und eine Brennposition des Energiestrahls (5) erzeugt wird und/oder eine Differenz zwischen einer Bezugsbrennposition und einer tatsächlichen Brennposition des Energiestrahls (5) auf der Grundlage von Strahlung (9) bestimmt wird, die von mindestens einem Bestrahlungsbereich (8) emittiert wird, der vor einem additiven Herstellungsverfahren auf einer Bauplatte (7) erzeugt wird.

2. Verfahren nach Anspruch **1,dadurch gekennzeichnet,dass** die Bestimmung auf der Grundlage von Wärmestrahlung (9) erfolgt, die aus dem Bestrahlungsbereich (8) emittiert wird, wobei die Wärmestrahlung (9) aufgrund einer Bestrahlung des Bestrahlungsbereichs (8) mit dem Energiestrahl (5) erzeugt wird.

3. Verfahren nach Anspruch 1 oder 2,**dadurch gekennzeichnet,dass** eine Bestimmungsvorrichtung (10) verwendet wird, die mindestens eine optische Detektoreinheit (13) umfasst, insbesondere mindestens einen optischen Sensor, vorzugsweise einen CMOS- oder CCD-Sensor, und/oder eine Fotodiode umfasst.

4. Verfahren nach Anspruch **3,dadurch gekennzeichnet,dass** eine Sensorebene durch die Bestimmungsvorrichtung (10) vorgesehen ist, wobei der zumindest einen Teil der Bestimmungsebene (6) aufweisende zumindest einen Bestrahlungsbereich (8) auf die Sensorebene abgebildet ist.

5. Verfahren nach Anspruch 4,**dadurch gekennzeichnet,dass** die Bestimmung auf der Grundlage eines Verhältnisses zwischen einer Beobachtungsebene der Sensorebene, insbesondere der verfügbaren Sensorebene, und einem Teil der Beobachtungsebene durchgeführt wird, der über die von dem Bestrahlungsbereich (8) emittierte Strahlung (9) bestrahlt wird, insbesondere eines Verhältnisses zwischen der Anzahl der Pixel der Beobachtungsebene und der Anzahl der Pixel der Beobachtungsebene, die über die von dem Bestrahlungsbereich (8) emittierte Strahlung (9) bestrahlt werden.

6. Verfahren nach einem der vorhergehenden Ansprüche,**dadurch gekennzeichnet, dass** die Fokusposition auf der Grundlage der Strahlung (9) bestimmt wird, die von der Bestimmungsebene (6) im Voraus zu einem additiven Herstellungsverfahren abgegeben wird, das an der Vorrichtung (1) durchgeführt wird.

7. Verfahren nach einem der vorhergehenden Ansprüche,**dadurch gekennzeichnet, dass mindestens zwei Sätze von Materialparametern bereitgestellt werden,** die sich auf verschiedene Materialien beziehen, die in einer Bestimmungsebene (6) angeordnet sind oder diese bilden, wobei die Bestimmung auf der Grundlage des gewählten Satzes von Materialparametern durchgeführt wird.

8. Verfahren nach einem der vorhergehenden Ansprüche,**dadurch gekennzeichnet,dass** mindestens zwei Bestrahlungsbereiche (8) in zwei verschiedenen Positionen, insbesondere in der Bauebene (17), erzeugt werden, wobei die Bestimmung für die mindestens zwei verschiedenen Bestrahlungsbereiche (8) durchgeführt wird.

9. Verfahren nach einem der vorhergehenden Ansprüche,**dadurch gekennzeichnet,dass** die Brennposition des Energiestrahls (5) über eine optische Vorrichtung (15) eingestellt wird, wobei die tatsächliche Brennposition des Energiestrahls (5) über die optische Vorrichtung (15) im Bestimmungsverfahren variiert wird.

10. Verfahren nach einem der vorhergehenden Ansprüche, **gekennzeichnet durch** eine optische Filtereinheit (14), die im Strahlungspfad der Strahlung (9) angeordnet ist, die von dem Bestrahlungsbereich (8) ausgestrahlt wird, der sich an die Bestimmungsvorrichtung (10) ausbreitet, wobei Strahlung, die am Bestrahlungsbereich (8) reflektiert wird, zumindest teilweise über die optische Filtereinheit (14) gefiltert wird, insbesondere zumindest ein Teil des Energiestrahls (5), der am Bestrahlungsbereich (8) reflektiert wird, gefiltert wird.

## Revendications

1. Méthode de détermination d'au moins une position focale d'un faisceau d'énergie (5) et/ou d'une différence entre une position focale de référence et une position focale réelle du faisceau d'énergie (5), utilisée dans un appareil (1) pour la fabrication additive d'objets tridimensionnels (2) au moyen d'une irradiation sélective successive par couches et d'une consolidation de couches d'un matériau de construction (3) qui peuvent être consolidées au moyen du faisceau d'énergie (5), dans laquelle une région d'irradiation (8) est générée dans un plan de détermination (6) et une position focale du faisceau d'énergie (5) et/ou une différence entre une position focale de référence et une position focale réelle du faisceau d'énergie (5) est déterminée sur la base du rayonnement (9) émis par au moins une région d'irradiation (8), qui est généré sur une plaque de construction (7) avant un processus de fabrication additive.

2. Méthode selon la revendication 1, **caractérisée en ce que** la détermination est effectuée sur la base du rayonnement thermique (9) émis par la région d'irradiation (8), dans laquelle le rayonnement thermique (9) est généré en raison d'une irradiation de la région d'irradiation (8) avec le faisceau d'énergie (5).

3. Méthode selon la revendication 1 ou 2, **caractérisée par l'utilisation** d'un dispositif de détermination (10) comprenant au moins une unité de détection optique (13), en particulier au moins un capteur optique, de préférence un capteur CMOS ou CCD, et/ou une photodiode.

4. Méthode selon la revendication 3, **caractérisée en ce sens qu'un** plan de détection est fourni par le dispositif de détermination (10), dans lequel au moins une partie du plan de détermination (6) comprenant au moins une région d'irradiation (8) est imagée sur le plan de détection.

5. Méthode selon la revendication 4, **caractérisée en ce que** la détermination est effectuée sur la base d'un rapport entre un plan d'observation du plan du capteur, en particulier le plan du capteur disponible, et une partie du plan d'observation qui est irradiée par le rayonnement (9) émis par la région d'irradiation (8), en particulier un rapport entre le nombre de pixels du plan d'observation et le nombre de pixels du plan d'observation qui sont irradiés par le rayonnement (9) émis par la région d'irradiation (8).

6. Méthode selon l'une des revendications précédentes, **caractérisée en ce que** la position focale est déterminée sur la base du rayonnement (9) émis à l'avance par le plan de détermination (6) à un procédé de fabrication additive effectué sur l'appareil (1).

7. Méthode selon l'une des revendications précédentes, **caractérisée** parla fourniture d'au moins deux ensembles de paramètres de matériaux relatifs à différents matériaux disposés dans ou formant le plan de détermination (6) par une unité de commande (16), dans laquelle la détermination est effectuée sur la base de l'ensemble choisi de paramètres de matériaux.

8. Méthode selon l'une des revendications précédentes, **caractérisée en ce qu'au** moins deux régions d'irradiation (8) sont générées dans deux positions différentes, en particulier dans le plan de construction (17), où la détermination est effectuée pour au moins deux régions d'irradiation différentes (8).

9. Méthode selon l'une des revendications précédentes, **caractérisée par** le réglage de la position focale du faisceau d'énergie (5) par l'intermédiaire d'un dispositif optique (15), dans lequel la position focale réelle du faisceau d'énergie (5) est modifiée par l'intermédiaire du dispositif optique (15) dans le processus de détermination.

10. Méthode selon l'une des revendications précédentes, **caractérisée par** une unité de filtrage optique (14) disposée dans la trajectoire de rayonnement du rayonnement (9) émis par la région d'irradiation (8) se propageant au dispositif de détermination (10), dans laquelle le rayonnement réfléchi à la région d'irradiation (8) est au moins partiellement filtré via l'unité de filtrage optique (14), en particulier au moins une partie du faisceau d'énergie (5) réfléchi à la région d'irradiation (8) est filtrée.
